# EUROPEAN PATENT SPECIFICATION

(11) **EP 4 046 836 B1**
(45) Date of publication and mention of the grant of the patent: **13.09.2023**
(21) Application number: 22155146.8
(22) Date of filing: 04.02.2022
(51) Int. Cl.: B60H 1/34

(54) **AIR DIFFUSER FOR A VEHICLE**
LUFTVERTEILER FÜR EIN FAHRZEUG
DIFFUSEUR D'AIR POUR UN VÉHICULE

(30) Priority: 08.02.2021 ES 202130095
(43) Date of publication of application: 24.08.2022
(73) Proprietor: Seat, S.A., 08760 Martorell (ES)
(72) Inventor: JUAREZ ENGUIDANOS, Antonio, MARTORELL (ES); PRADAS CAULIN, Angel, MARTORELL (ES); DEL CAMPO MELGAREJO, Luis, MARTORELL (ES)
(74) Representative: Ponti & Partners, S.L.P

(56) References cited:
- EP-A1- 3 632 726
- DE-A1-102005 027 746
- US-A1- 2018 319 255

## Description

### Object of the invention

The present invention relates to an air diffuser for a vehicle according to claim 1, which incorporates significant innovations and advantages. The air diffuser for a vehicle has a mechanism for displacing an air guiding means arranged inside the cavity of the air diffuser between a first upper position and a second lower position following a C-shaped path, such that it is displaced between a plurality of intermediate positions with a high precision for directing the airflow upwards/downwards, and the mechanism for displacing the air guiding means includes as few parts as possible.

### Background of the invention

Air diffusers installed in dashboards for the purpose of directing air in the desired direction towards the interior of the cabin of a vehicle are known. The air diffusers usually have a plurality of slats or air guiding elements in their inner cavity, generally a first group of slats arranged in the region farther away from the cabin for directing air in a first direction and a second group of slats in the region closer to the cabin for directing air in a second direction, with this second group of slats being visible to the user who is inside the cabin of the vehicle. As a result of the combination of these two groups of slats, air is successfully directed in all directions. Having a plurality of slats in the region of the dashboard has the drawback of said slats taking up too much space in the dashboard, with the associated aesthetic drawbacks that this in turn entails. To that end, the current objective is to conceal the slats of air diffusers from the users of the vehicle and to furthermore have the air outlet groove taking up as little space as possible in the dashboard, but with the same functionalities.

In relation to the mentioned trend, document EP1331116 is known, which discloses an air diffuser for the interior of a vehicle comprising inner walls of the cavity of the arc-shaped air casing such that the air conforms to the walls. The diffuser has a guiding means inside the cavity for guiding the air exiting the nozzle and an adjusting element for adjusting the guiding means. This guiding means is pivotable with respect to the opening, following the air exit direction, before the arched region.

The main drawback of document EP1331116 is that the outgoing air cannot be optimally directed to the cabin. This is due to the fact that, in order to achieve a good Coand 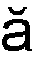 effect, the air must conform to the arched surfaces of the inside of the cavity in the outlet region, such that the air is constricted in that region. However, in document EP1331116 the air is constricted in the air inlet region in the cavity of the diffuser, to then be expanded in the region closer to the air outlet. The widening of the channel in this region prevents the channelled or directed exit of the airflow. Moreover, this solution means having two pivotable elements, a guiding means, and a constricting element, which means greater complication during assembly.

Document EP3632726A1, belonging to the same proprietor, is also known, which discloses an air diffuser for a vehicle (1), defining a single, very narrow and elongated air outlet opening (22) of the diffuser; wherein the air diffuser comprises a casing (2), wherein the casing (2) defines: an air inlet opening (21), an air outlet opening (22), and a cavity (23) arranged between the inlet opening (21) and the outlet opening (22). The casing (2) comprises a first wall (24) and a second wall (25), wherein the first wall (24) is facing the second wall (25), wherein the first wall (24) and the second wall (25) define a narrowing of the cavity (23) until the outlet opening (22), wherein the air diffuser comprises a guiding means (3) arranged in the cavity (23), wherein the guiding means (3) comprises a first end (31) close to the outlet opening (22), characterised in that the guiding means (3) can be displaced between a first position, in which the first end (31) is arranged adjacent to the first wall (24), and a second position, in which the first end (31) is arranged adjacent to the second wall (25).

However, this document EP3632726A1 does not provide any description with respect to the mechanism which has as few parts as possible and allows this movement of the slat from the upper position to the lower position following a C-shaped path in a multitude of intermediate positions between the two end positions and in a very effective and accurate manner.

Document US2018319255 discloses an air vent for ventilating a passenger compartment of a motor vehicle, including a rectangular housing and a rectangular air outlet opening. So as to guide an air current and so as to control an air volume, a flow-around body is proposed that can be displaced longitudinally and transversely in the housing and also be used to close the air outlet opening.

Document DE102005027746A1 discloses an air outlet having a rectangular frame with several transversally positioned bridges. Each of the bridges has a triangular cross section with a plane segment at the front and the crest pointing to the inner space of the unit. Movable elements are positioned in the gaps between the bridges. The elements have plane fronts and curved rear areas. The shape of the gaps created when the elements are moved to the inner space can be varied because of the specific contours of both the bridges and the moving elements.

There is therefore a need to offer an alternative with respect to the state of the art which covers the drawbacks identified therein, providing an air diffuser for a vehicle, preferably suitable to be installed in an inner part of the vehicle, and particularly for directing air to the interior of the cabin of the vehicle in one or more directions, which diffuser has an air guiding means for directing air in one direction and with a high efficiency in controlling outgoing air and a high precision in controlling the different intermediate positions of this single slat.

### Description of the invention

The first object of the present invention is to provide an air diffuser for a vehicle, preferably suitable to be installed in an inner part of the vehicle, for example, integrated in the dashboard, and having an air guiding means arranged inside the diffuser for directing outgoing air to the cabin in one direction, and solving the aforementioned drawbacks, having the advantages that are described below.

According to a first aspect, the present invention provides an air diffuser for a vehicle, as defined in independent claim 1.

Adjacent is understood to mean contiguous or located in the surrounding area, where the first cylindrical toothed wheel may or may not contact the side wall of the casing.

When referring to a C-shaped movement, the C shape should not be strictly semicircular, rather it can be open or closed, i.e., the opening thereof can be increased or reduced.

Therefore, the guiding means does not perform a movement of longitudinal displacement between the first position, or maximum upper position of displacement, and the second position, or maximum lower position of displacement. The displacement of the guiding means from the first position to the second position or from the second position to the first position comprises a first distancing movement with respect to the outlet opening and a second approaching movement with respect to said outlet opening, both movements being consecutive, i.e., one after the other. As a result of the mentioned approaching and distancing movements of the guiding means with respect to the outlet opening, the outgoing airflow of the diffuser is not penalised. Efficiency in the treatment of the air of the diffuser is thereby increased, and greater capacity for directing the outgoing airflow through the outlet opening achieved.

A single guiding means is used in the present invention. This single guiding means is configured for directing airflow in the vertical plane. Therefore, when the guiding means is arranged in the first upper position, the airflow is directed to an upper region of the inner cabin of the vehicle. Maximum directing to said upper region is achieved in this position. In contrast, when the guiding means is arranged in the second lower position, the airflow is directed to a lower region of the inner cabin of the vehicle. Maximum directing to said upper region is achieved in this position.

For one embodiment, the cavity comprises a single air inlet opening and a single air outlet opening. Said inlet and outlet openings are comprised in planes substantially parallel to one another. In the present invention, airflow advancement direction inside the cavity is generally understood to mean a direction substantially perpendicular to said planes. Therefore, airflow advancement direction inside the cavity is understood to mean an airflow advancement direction from the inlet opening to the air outlet opening.

In general, the first distancing movement of the guiding means with respect to the outlet opening means that the first end of said guiding means increases the separating distance with respect to the plane defined by said outlet opening, in said airflow advancement direction. Similarly, the second approaching movement of the guiding means with respect to the outlet opening means that the first end of said guiding means reduces the separating distance with respect to the plane defined by said outlet opening, in said airflow advancement direction. The path followed in the displacement of the guiding means from the first position to the second position is understood to be the same as the path followed in the displacement of the guiding means from the second position to the first position, but in a reverse direction of displacement.

The mechanism displaces the guiding means in said curved movement, maintaining one same orientation with respect to the casing during the entire movement, experiencing only a translational movement. Therefore, during the displacement of the guiding means, said guiding means does not rotate, pivot, or rock upwards or downwards with respect to the casing. The curved displacement or route followed by the guiding means simplifies the structure of the air diffuser, reducing the number of mechanisms and components required.

Therefore, in said first and second positions, the guiding means constricts the air against one of the walls of the inner cavity, completely or partially blocking exit through the other channel. Furthermore, the guiding means can be displaced in a plurality of intermediate positions between the first position and the second position, such that in each intermediate position the guiding means divides the cavity into two channels. The effect to be achieved is to better direct the air in the region close to the air outlet opening. The guiding means is configured to control the ratio between the upper flow and the lower flow, such that, in an intermediate position between the first position and the second position, the flows are the same. In this sense, if the airflow section of a first channel is greater than the airflow section of a second channel, the air extracted through the air outlet opening will be diverted in the direction of the first channel. The greater the ratio between the first channel and the second channel is, the greater the directing induced towards the outgoing flow.

The surprising effect achieved by this invention is that, as a result of this inventive mechanism for displacing the guiding means between a plurality of positions following a specific path which, according to an elevational view, has a C shape, the outgoing airflow of the diffuser can be directed in a specific direction by means of a control element or an actuator operated by the user and a specific given position between the multiple specific positions of the path of the guiding means can be chosen with a high precision.

The mechanism for displacing the guiding means will also be referred to interchangeably as guiding mechanism.

This mechanism for displacing the guiding means, along with a specific configuration of the guiding means, presents a greater visual integration in the design by having a smaller number of parts and by having the guiding means arranged inside the cavity of the air diffuser.

Other advantages of this invention are the simplicity of actuation, a smaller number of parts with respect to another type of known mechanisms, and a larger space available for the airflow.

When referring to a guiding means, a slat-type guiding means is referred to. Preferably, the guiding means is formed by a single main slat with a body the section of which extends in a transverse direction "Y" and wherein the single main slat is arranged horizontally inside the cavity for directing outgoing air through the outlet opening according to a vertical direction "Z", or arranged vertically in the cavity for directing outgoing air through the outlet opening according to a transverse direction "Y".

According to a preferred embodiment of the invention, the air diffuser of the invention further comprises, in addition to the main guiding means, another additional air guiding means for directing outgoing air through the outlet opening according to a direction perpendicular to the directing direction of the main slat, wherein the additional guiding means is arranged in a position more rearward with respect to the outlet opening than the main slat, which occupies a position closer to the outlet opening. This additional guiding means is preferably a plurality of parallel slats which can be controlled independently of the control of the main air guiding means by means of mechanisms known in the state of the art. In other words, there is one control for the main slat and another independent control for the secondary slats.

According to a first alternative of the preferred embodiment described in the preceding paragraph of the invention, the air guiding means of the invention is formed by a single main slat arranged horizontally inside the cavity for directing outgoing air through the outlet opening according to the vertical direction "Z" (i.e., which allows (upward or downward) regulation) arranged in a position close to the air outlet opening (and wherein this main slat can be controlled by means of the mechanism claimed in this invention for displacing the guiding means between a first upper position and a second lower position); and furthermore one or more vertical secondary slats arranged in a position farther away from the air outlet opening configured for directing outgoing air through the outlet opening according to a transverse direction "Y" (i.e., which allows the horizontal regulation of air in the diffuser (left and right)) and wherein the single secondary slat or a plurality of secondary slats can be controlled by means of mechanisms known in the state of the art. This single horizontally-arranged main slat has a body with a cross-section in a teardrop or aerodynamic shape, although other configurations are possible.

This arrangement described in the preceding paragraph can be perfectly reversed with respect to the presented embodiment, so the inventive concept would work exactly the same. Therefore, according to a second alternative of the preferred embodiment, which does not belong to the present invention, a single main slat can be provided arranged vertically inside the cavity for directing air horizontally (left and right) arranged in a position close to the air outlet opening (and wherein this main slat can be controlled by means of the mechanism claimed in this invention for displacing the guiding means between a first left position and a second right position); and furthermore one horizontal secondary slat or a plurality of horizontal secondary slats for directing outgoing air through the outlet opening according to a vertical direction "Z" (upward and downward) (wherein the one secondary slat or a plurality of secondary slats can be controlled by means of mechanisms known in the state of the art).

According to a preferred embodiment of the invention, the outlet of the air diffuser comprises a single groove. In this sense, the present invention, in its more simplified embodiment, has a diffuser for the interior of a vehicle integrated in the dashboard having a single groove, such that the assembly of horizontal slats is eliminated. The airflow is directed in all directions in the vertical plane based on manual or electrical kinematics by means of the positioning of the main slat or guiding means in different positions within the cavity of the diffuser.

The term "cylindrical toothed wheel" is understood to mean a cylindrical body or disc rotating about an axis of rotation and having teeth in the entire outer portion thereof.

With respect to the configuration of the first toothed wheel of the guiding mechanism, it preferably comprises an actuating body which can be manually operated by the user to generate the rotational movement of the first wheel. This actuating body can be, for example, a roller guider or control element, the rotation of which induces the rotational movement of the first wheel. The first toothed wheel and the actuating body can be one same body comprising a single axis of rotation. This first toothed wheel is the larger toothed wheel, i.e., the crown.

Alternatively to manual actuation by the user, the guiding mechanism may comprise a servomotor coupled to the first toothed wheel such that it automatically generates the rotational movement of the first toothed wheel in a controlled manner. The servomotor is connected to a control unit which governs the operation thereof based on the predetermined speed or position parameters of the rotating shaft which are established according to specific needs.

With respect to the configuration of the second and third toothed wheels of the guiding mechanism, they are preferably arranged in one same vertical line.

The second and third toothed wheels also preferably have the same size and configuration, such that they rotate at the same speed and in the same direction.

The diameter of the second and third toothed wheels is also preferably smaller than the diameter of the first toothed wheel. These second and third toothed wheels are therefore smaller toothed wheels, i.e., pinions.

The first, second, and third toothed wheels are also preferably outer straight-cut gears, i.e., having straight, radially projecting teeth arranged in the outer portion of each wheel. Although the teeth are not straight (but rather have, generally, a special shape to achieve a constant transmission ratio, mainly an involute shape, but less commonly also a cycloid shape), the border of each tooth is straight and aligned parallel to the axis of rotation. These cylindrical toothed wheels with straight teeth work such that they transmit the rotation between parallel shafts. As a result of the geometry thereof, only one pair of teeth is in contact at any given moment. This means that all the power (speed, force) is transmitted at any given moment by means of a pair of teeth, so it is used to transmit low or medium speeds, like the case of this invention.

With respect to the first, second, and third cylindrical toothed wheels, they are preferably mechanically linked to the side walls of the casing, thereby allowing a relative rotational movement of said first, second, and third toothed wheels with respect to the casing. In other words, the three cylindrical toothed wheels are fixed with respect to said casing, i.e., there is no relative translational movement or displacement between these components. The friction in these attachments between the casing and the toothed wheels, in addition to the actual friction between the teeth of the toothed wheels, allows the guiding means to be retained in any of the intermediate positions of displacement, compensating for the action of gravity on the guiding means.

The term "arm" is understood to mean an articulated arm having a fixed end constituting the axis of rotation thereof and its other opposite end is free and rotates with respect to its axis of rotation.

With respect to the four - arms, their length (i.e., the distance from their respective axis of rotation to their free end for attachment with the longitudinal bodies) is preferably identical to one another, such that the second and third axes of rotation are arranged in one same vertical, and such that the longitudinal bodies are arranged in one same vertical during the rotational movement thereof with respect to their respective second and third axes of rotation.

The main objective of the longitudinal bars or bodies is to transfer the movement generated on a first side of the casing to the other side. If this transmission of movement were absent, the mechanism may fail. The side or flank comprising the first, second, and third toothed wheels would try to rotate, operated by the first toothed wheel, but the opposite side, which is not directly actuated, would not. The transmission of movement is ensured by means of these two longitudinal bars, connecting the arms of both sides and allowing the rotation thereof with respect to the second and third axes of rotation. Using two elongated longitudinal bodies allows the desired movement of displacement to be transmitted to the guiding means, while at the same time prevents the guiding means from swinging, forcing it to maintain one same orientation within the cavity at all times.

The existence of two linking points for each of the transverse ends of the guiding means ensures that said guiding means does not swing, particularly in the transverse axis "Y".

The two longitudinal bodies are also preferably arranged in one same vertical plane, according to a vertical direction "Z", with both longitudinal bodies being separated from one another by a distance "d".

Precisely, this arrangement of the two longitudinal bodies within the guiding means helps to maintain one same orientation of the guiding means as the guiding means displaces in a C-shaped movement. Therefore, each longitudinal body has two linking points with the guiding means, one at each transverse end of said guiding means. The existence of two mechanical attachment or linking points at each of the side ends of the guiding means, and particularly the fact that said mechanical linking points are arranged in the same vertical, ensures that the guiding means defines a translational movement with respect to the cavity, without there being any relative rotation or rocking or swinging movements.

Optionally, the longitudinal bodies comprise a respective reinforcement element extending longitudinally from a side end of the guiding means to the opposite end.

Since the guiding means has a significant length, it may be desirable to provide relevant reinforcements to ensure the correct transmission of movement from one end to the other and to thereby prevent the longitudinal bars from breaking or being placed incorrectly. It can be, for example, a reinforcement projecting from each longitudinal body in one direction towards the innermost part of the cavity and extending in the longitudinal direction, or it can also be a metal insert. These reinforcement elements can be, for example, a thin straight flange which emerges from the outer surface of each longitudinal bar in one direction.

If a sufficiently rigid material (for example, a plastic with high rigidity or metal) is used for manufacturing the longitudinal bars, these reinforcement elements would not be necessary.

With respect to the configuration of the casing, each side wall of the casing preferably comprises a respective opening facing the opening of the opposite side wall, wherein each opening is configured and arranged to house the respective arms and to allow their rotational movement with respect to their respective second and third axes of rotation.

According to a possible embodiment of the openings of each side wall of the casing, they have a geometry such that they define an upper contact region and a lower contact region with the respective arms such that they limit the rotational movement of said arms and define the first upper position of displacement of the guiding means and the second lower position of displacement of the guiding means, respectively.

These lower and upper contact regions of the openings may optionally comprise a coating made of a soft material. Said coating made of a soft material allows the durability of the system, as well as the haptics or tactile sensation for the user, to be improved significantly if the guiding means is operated manually.

There are other alternatives for limiting the movement of the guiding means, such as the toothed surfaces of the first toothed wheel, or the contact between the guiding means and the inner walls of the cavity, but the one indicated above between the arms and the openings is more robust.

According to a specific embodiment of the casing, it comprises a first wall and a second wall arranged at its two vertical ends, according to a vertical axis "Z", and facing one another, wherein the first wall comprises a lower border and wherein the second wall comprises an upper border, wherein the upper border and the lower border vertically define the outlet opening. Therefore, according to an optional embodiment, the guiding means may be facing and/or contacting said upper and lower borders in the region of the air outlet, blocking the exit of air through one of the channels in the first and second positions.

According to a possible embodiment of the casing, the first wall and the second wall define a narrowing of the cavity until the outlet opening, i.e., in the airflow advancement direction.

According to a particular embodiment, the first and second walls of the casing are concave walls. In this manner, the air conforms to the walls following the path thereof as a result of the Coand 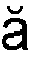 effect. Accordingly, a widening, and subsequently a narrowing of the cavity, is produced in the airflow advancement direction in the region close to the air inlet opening for the entry of air into the cavity.

It should be mentioned that the upper border and the lower border are comprised in a plane substantially perpendicular to the air advancement direction in the cavity, i.e., in one same vertical. In this sense, a symmetrical structure both of the casing and of the cavity defined by said casing is achieved. The outgoing airflow is therefore diverted in a first direction or in a second direction, in equal magnitude, depending on the position of the guiding means.

In another embodiment of the invention, the first end is arranged in a position flush with the lower border, with the guiding means being in the first position, and wherein the first end is arranged in a position flush with an upper border, with the guiding means being in the second position. Therefore, the flow does not run into any projection, wall, or obstacle which diverts the outflow direction, with the air of the diffuser being better directed. Furthermore, the walls defining the cavity are continuous to prevent the airflow from running into possible obstacles which create interferences.

To better understand what has been set forth above, drawings which schematically depict, only by way of non-limiting example, practical cases of several embodiments of the air diffuser object of the present invention are attached.

### Brief description of the figures

Figure 1 is a perspective view of the interior of a vehicle with two air diffusers, according to the present invention.
Figure 2 is a perspective view of an air diffuser for a vehicle, with a casing defining a single outlet opening.
Figure 3 is a first side sectional view of an air diffuser for a vehicle, with the guiding means configured to perform a curved displacement.
Figure 4 is a perspective view of a first side of the air diffuser without the casing, showing the mechanism for displacing the guiding means of an air diffuser for a vehicle in an intermediate position of displacement.
Figures 5, 6, and 7 are respective side views of the air diffuser without the casing, from the intermediate middle position (when the guiding means is rearward with respect to the air outlet opening) (Figure 5) to a lower position (when the guiding means is close to the air outlet opening) (Figure 7), in which three different positions of the rotational movement of the arms, the rotation of the roller guider of the first wheel, and the displacement of the central slat can be observed.
Figure 8 is a perspective view of the inside of the casing of the same first side of the air diffuser without the casing.
Figure 9 is a perspective view of the inside of the casing in a side region of the casing opposite that of Figure 8, in which the guiding means is shown partially transparent.

### Description of exemplary embodiments

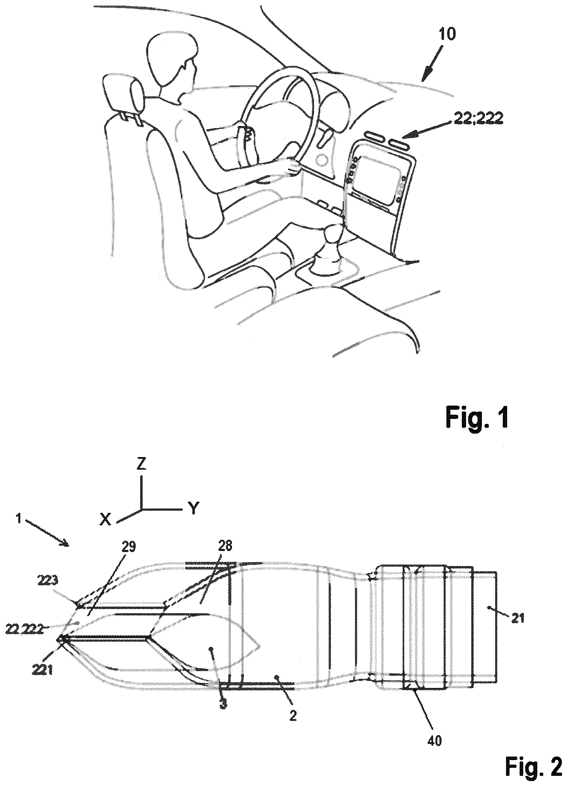

An exemplary embodiment of the air diffuser for a vehicle of the present invention is described below in reference to Figures 1 to 9.

For the purpose of the description, directions and orientations are referred to by means of horizontal, transverse, and vertical axes. The horizontal axis "X" refers to the direction of displacement of the airflow from the inlet opening 21 to the outlet opening 22. The transverse axis "Y" refers to the direction perpendicular to the horizontal axis, with an orientation to the left and right. The vertical axis "Z" refers to the direction perpendicular to the horizontal axis, with an upward or downward orientation.

A perspective view of the interior of the cabin of a vehicle 1 with two air diffusers can be seen by way of illustration in Figure 1. Each air diffuser includes an outlet opening 22, including a groove 222. It can be seen that said outlet opening 22 has a surface or area that is significantly smaller than the known diffusers. One of the objectives to be achieved with the present invention is to reduce the size used for the air outlet groove 222 by reducing the surface visible to the user from the interior of the vehicle, such that the groove 222 is as narrow as possible. Specifically, it is observed that said outlet opening 22 extends in the transverse axis and in the vertical axis. Particularly, the invention seeks to reduce one of the two levels with respect to current air diffusers, thereby allowing greater freedom in designing dashboards. In the case shown in Figure 1, two outlet openings 22 with a reduced level in the vertical axis are observed. In a preferred embodiment of the present invention, the height of this groove 222 visible from the interior of the cabin of the outlet opening 22 has a height of less than 20 mm and is preferably 12 mm.

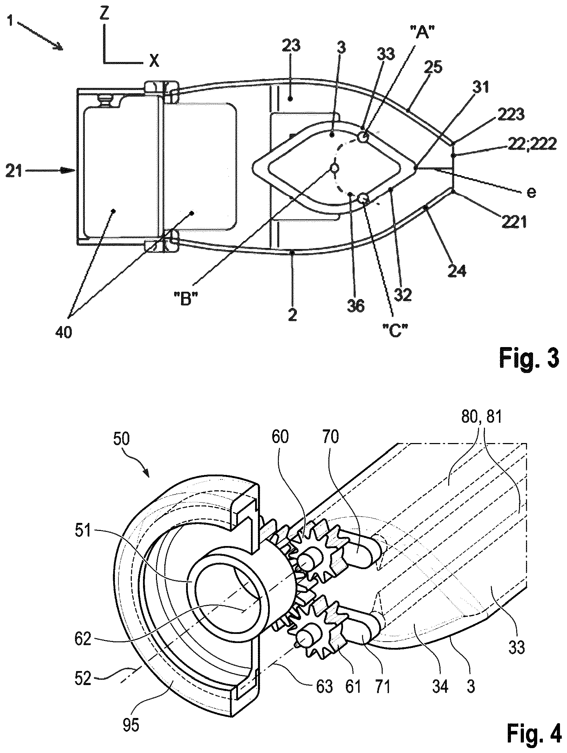

According to the present invention, by means of a single guiding means 3 located inside the air diffuser 1, the air stream exiting through the outlet opening 22 of the diffuser 1 can be directed in a vertical direction of the stream exiting through the outlet opening 22, so the horizontal slats conventionally arranged in the outer region of the diffuser are advantageously eliminated, such that a single substantially rectangular groove 222 remains in the dashboard 10 of the vehicle. The space used for the exit of air is thereby reduced. In other words, in this specific illustrated case, the outlet opening 22 of the air diffuser 1 shown in Figures 2 and 3 corresponds to a single groove 222. Alternatively, if a horizontal guiding of the outgoing air generated by the single guiding means 3 is desired, in an alternative embodiment (not shown in the figures), at least one vertically arranged slat which is also placed in the part closer to the inlet opening 21 would be required.

As seen in Figure 2, the air diffuser is formed by a casing 2, which has significantly greater dimensions than the outlet opening 22. Said casing 2 has an air inlet opening 21 and an air outlet opening 22. This inlet opening 21 and outlet opening 22 are substantially parallel to one another, with the inlet opening 21 having dimensions greater than the outlet opening 22. It is observed that the airflow advances from the inlet opening 21 to the outlet opening 22 defining an airflow advancement direction or a horizontal direction.

The casing 2 may comprise a set of walls defining a cavity 23, wherein said cavity 23 only has the inlet opening 21 and the outlet opening 22 for the introduction and extraction of airflow. There is housed inside said cavity 23 a single guiding means 3 which can be displaced from an upper position to a lower position according to the vertical axis, such that said guiding means 3 is configured to direct the airflow in the vertical direction. Therefore, according to the position of said guiding means 3 inside the casing 2, the outgoing airflow will be directed through the outlet opening 22 to an upper, intermediate, or lower region of the cabin of the vehicle 1.

As observed in said Figure 2, the guiding means 3 may comprise a width in the transverse axis substantially equal to the width of the outlet opening 22. The airflow is thereby better directed. Said guiding means 3 comprises an aerodynamic shape, such that it defines an edge in the region closer to the air inlet opening 21. The height of said guiding means 3 increases, resulting in a widening of the guiding means 3 in the airflow advancement direction inside the cavity 23. The guiding means 3 may then comprise a narrowing or reduction in height until a new edge arranged at the end closer to the outlet opening 22. Said aerodynamic shape of the guiding means 3 allows the circulation of the airflow inside the cavity 23 to be improved, reducing the number of turbulences and boundary layer detachments inside said cavity 23.

It is observed that the section of the guiding means 3, according to a vertical plane, is constant along the transverse axis "Y". Therefore, said geometric shape of the guiding means 3 extends from left to right of the casing 2. In turn, the cavity 23 is defined by side walls (28, 29), in addition to the first wall 24 and the second wall 25. The guiding means 3 is arranged in the cavity 23 for direct contact with said side walls (28, 29) in any of the first, second, or intermediate positions of the guiding means 3. Therefore, lateral airflow channels, forcing the air circulating through the inside of the cavity to flow only through the upper channel 231 or through the lower channel 232, are not generated as will be described below.

As depicted in Figure 3, the air diffuser 1 for a vehicle mainly comprises an outer casing 2, an air guiding means 3, and a mechanism 50 for displacing the guiding means 3 between two end positions following a C-shaped path 36 (marked by means of a dashed line) but without rocking or rotating. The mechanism 50 for displacing the guiding means 3 has not been depicted in this Figure 3. Three points ("A", "B", and "C") corresponding with three specific positions have been marked in this C-shaped path 36: the upper advanced position or first upper position "A", the middle rearward position or third intermediate position "B", and the lower advanced position or second lower position "C".

The outer casing 2 has an air inlet opening 21 at its rear end, an air outlet opening 22 at its front end, and a cavity 23 arranged between the two openings 21 and 22. The casing 2 has two lower and upper walls 24, 25 and also two side walls 28, 29 at the two transverse ends thereof according to a transverse axis "Y", wherein the lower and upper walls 24, 25 are facing one another, as do the side walls 28, 29. These lower and upper walls 24, 25 are arched and define a narrowing (i.e., which reduces the separating distance between both) as they approach the air outlet opening 22. The lower wall 24 has a lower front border 221 and the upper wall 25 has an upper front border 223, wherein the upper border 223 and the lower border 221 define the outlet opening 22. With respect to the side walls 28, 29, these side walls are straight side walls (see Figure 2).

In turn, the air guiding means 3 is arranged inside the front region of the cavity 23 and is configured for directing outgoing air through the outlet opening 22 according to a vertical direction "Z".

The air guiding means 3, in this case, has a section in a substantially teardrop shape with a front end 31 extending along the entire opening 22 (see Figure 2). This teardrop shape has a curved upper surface 33 and a curved lower surface 32, which are symmetrical with respect to plane "X"-"Y". Therefore, the upper air stream and the lower air stream are the same. The slat 3 is positioned inside the cavity 23 such that the lower surface 32 is facing the lower wall 24 of the casing 2 and the upper surface 33 is facing the upper wall 25 of the casing 2. Furthermore, to correctly and optimally direct the air to the outlet within the cavity 23 of the diffuser 1, the guiding means 3 has in its front most portion a shape complementary to the inner outlet walls so as to constrict the air in the outlet region. Specifically, the region of the inner outlet walls of the cavity 23 close to the air outlet opening 22 is arched and the lower surface 32 and the upper surface 33 of the guiding means 3 are also arched.

In this Figure 3, the air guiding means 3 has been depicted located in a middle position "B" (or third position) of all the intermediate positions within the cavity 23. In this third intermediate position "B", it can be clearly seen that the front end 31 of the air guiding means 3 is arranged away from the air outlet opening 22 by a distance "e", thereby freeing the region closer to the outlet of obstacles that obstruct the air and reducing head loss. Furthermore, in this third position "B", the guiding means 3 is more hidden from the view of a user who is in the interior of the cabin. In the lower and upper end positions of the air guiding means 3 (not depicted), the air guiding means 3 would be arranged touching the upper wall 25 or lower wall 24 and in a position closer to the outlet opening 22. The C-shaped path 36 running along the central point of the air guiding means 3 within the cavity 23 has been illustrated in this Figure 3 by means of a dashed line. In the embodiment shown in Figure 3, at least one front region of the lower surface 32 is substantially parallel to the second wall 25, with the guiding means 3 being in the first position, and in that at least one front region of the upper surface 33 is substantially parallel to the second wall 26, with the guiding means 3 being in the second position; and wherein the upper surface 33 is symmetrical to the lower surface 32 of the guiding means 3 with respect to a transverse axis "Y" arranged parallel to the air exit direction. The geometry of the guiding means 3 in combination with the inner walls of the casing 2 allows the air to be constricted against the upper and lower walls and to come out of the cavity 23 with greater intensity in the region of the outlet opening 22.

In the specific case illustrated in the attached figures, the front most portion of the upper surface 33 of the main slat 3 will be in a position substantially parallel to the upper wall 25 of the casing 2, when the guiding means is in the first upper position "A", and the front most portion of the lower surface 32 of the main slat 3 will be in a position substantially parallel to the front most portion of the lower wall 25, when the guiding means is in the second lower position "C". Furthermore, it is understood that in the plurality of intermediate positions between the first upper position "A" and said third middle position "B", or in the plurality of intermediate positions between the second lower position "C" and said third middle position "B", the first end 31 of the guiding means 3 is also arranged away from the outlet opening 22, but by a smaller magnitude.

As indicated above, the displacement of the guiding means 3 from the first upper position to the second lower position or vice versa comprises a first distancing movement with respect to the outlet opening 22 and a second approaching movement with respect to said outlet opening 22. In the first distancing movement, the separating distance "e" between the first end 31 of the guiding means 3 and the outlet opening 22 increases gradually until the third intermediate position (shown in Figure 3) of the guiding means 3, and during the second approaching movement, the separating distance "e" between the first end 31 of the guiding means 3 and the outlet opening 22 decreases gradually from the third position of the guiding means 3.

The outgoing airflow inside the cavity 23 works as follows: two air channels divided by the guiding means 3 are created in the different intermediate positions, each air channel being arranged between a respective surface 33, 32 of the guiding means 3 and the inner side walls 24, 25 of the casing 23. When the guiding means 3 is in the upper position or in the lower position of the cavity 23, the guiding means 3 constricts the air against one of the walls 24, 25 of the inner cavity 23, completely or partially blocking exit through one of the channels. In the region of the air outlet, the guiding means 3 may have surfaces 33, 32 substantially parallel to the respective inner surfaces 24, 25 of the cavity 23, such that the narrowing of the air in the outlet of the casing 2 is optimum. As a result of the guiding means 3 defining a shape substantially parallel to the inner walls 24, 25 of the casing 2, at least in the outlet region, optimal directing is achieved right in the air outlet region, because the air channel does not undergo any expansion or compression, improving the constriction of said air channel, resulting in the air being better directed once it left the cavity 23 of the air diffuser 1.

It should be indicated that the guiding means 3 comprises an upper surface 33 facing the upper wall 25 and a lower surface 32 facing the lower wall 24, wherein at least one region of the upper surface 33 can be substantially parallel to the upper wall 25, with the guiding means 3 being in the second position "C", and wherein at least one region of the lower surface 32 is substantially parallel to the lower wall 24 with the guiding means 3 being in the first position "A". The guiding means 3 and the upper and lower walls defining the cavity 23 being parallel allows the airflow to be optimally directed. Therefore, in the final segment, the two air outlet channels comprise a constant section, without any narrowing or widening in said section. Said constant section is independent of the position of the guiding means 3.

As can be seen in Figures 2 and 3, the specific embodiment illustrated in the attached figures depicts rear vertical slats 40 configured to enable changing the direction of the airflow in the horizontal plane, i.e., to a right or left region of the interior of the cabin. Said rear vertical slats 40 are arranged in a region adjacent to the inlet opening 21, inside the cavity 23, i.e., in a rear position with respect to the main slat 3.

Reference has been made in Figures 1 to 3 to a preferred geometric configuration of the air diffuser 1. Said configuration which combines a specific geometry of the walls of the casing 2 and of the guiding means 3 allows, with a displacement of the guiding means 3 inside of the casing 2, the airflow leaving the air diffuser 1 to be better directed, while at the same time improving the efficiency thereof, reducing head losses. In any case, it should be highlighted that this is an optional and merely illustrative configuration, for the purpose of exemplifying the need of the displacement of the guiding means 3 as set forth in the claims. Accordingly, the mechanism 50 of the present invention can be used with other geometric configurations of the air diffuser 1 which require the displacement of the guiding means 3 as set forth above.

As seen in Figure 4, the air diffuser 1 comprises a mechanism 50 for displacing the air guiding means 3 between a first upper position and a second lower position and vice versa. This mechanism 50 for displacing the air guiding means 3 mainly comprises a first cylindrical toothed wheel 51, second and third cylindrical toothed wheels 60, 61 separated from one another, two first arms 70, 71 extending from the respective axis of rotation 62, 63 of each of the second and third toothed wheels 60, 61, and two second arms 90, 91 arranged in the opposite side wall 28, 29 of the casing 2 with respect to the two first arms 70, 71. This Figure 4 only illustrates the side of the mechanism for displacing the guiding means 3 where the toothed wheels 51, 60, and 61 are located.

As regards the first cylindrical toothed wheel 51, it is arranged outside the cavity 23 and adjacent to one of the side walls 28, 29 of the casing 2. According to a possible embodiment shown in the attached figures, this first cylindrical toothed wheel 51 has a toothed wheel with the outer toothing rotating about a first axis of rotation 52 and a roller guide-type actuator element 95 which allows the user to manually rotate this roller guider 95, i.e., to directly rotate the toothed wheel arranged in the rear portion thereof, is integrally connected to this toothed wheel at its external portion. The roller guider 95 and first toothed wheel 51 can be one same component obtained through one same plastic injection mould.

As regards the second and third cylindrical toothed wheels 60, 61, they are arranged connected to the first toothed wheel 51 in different positions, wherein these two different positions are in the same vertical plane. According to a possible embodiment shown in the attached figures, these second and third cylindrical toothed wheels 60, 61 have the same configuration and size and are formed by a toothed wheel with outer toothing which can rotate about second and third axes of rotation 62, 63, respectively. Said second and third cylindrical toothed wheels 60, 61 rotate driven by the first toothed wheel 51. The teeth of the second and third cylindrical toothed wheels 60, 61 and of the first cylindrical toothed wheel 51 are designed for mechanically coupling with one another. It can be clearly seen in this Figure 4 how the outer diameter of the second and third cylindrical toothed wheels 60, 61 is substantially smaller than (for example, half) the outer diameter of the first cylindrical wheel 51. The first toothed wheel 51 as well as the second and third toothed wheels 60, 61 are mechanically linked with the side wall of the casing (not depicted in Figure 4). This mechanical linkage allows the rotational movement of the toothed wheels 51, 60, 61 to be limited to only one degree of freedom, thereby preventing any relative translational displacement between the casing 2 and said toothed wheels 51, 60, 61.

As regards the two first arms 70, 71 extending from the respective axis of rotation 62, 63 of each of the second and third toothed wheels 60, 61, they have an end of each eccentric part integral with a respective toothed wheel of the second and third toothed wheels 60, 61. This configuration advantageously allows the two arms 70, 71 to be able to displace in a rotational movement with respect to their respective fixed axis of rotation 62, 63. The two arms 70, 71 are formed by respective elongated arms and they have the same configuration and size. Additionally, the rotational movement of both arms 70, 71 is parallel to one another in any of the positions of the rotational movement thereof. The opposite or free end of said arms 70, 71 is configured to induce the C-shaped displacement movement of the guiding means 3, as set forth below.

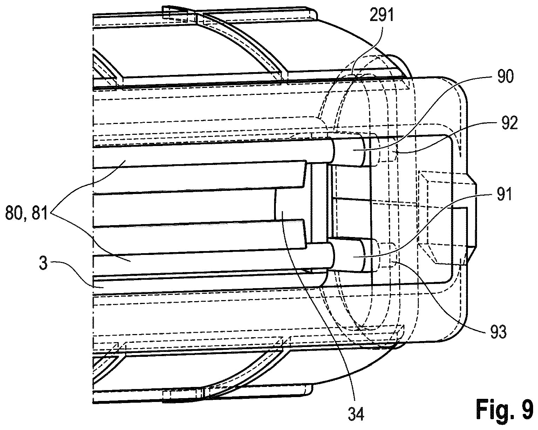

Two second arms 90, 91 arranged in the opposite side wall 29 of the casing 2 with respect to the two first arms 70, 71 are provided at the opposite side end of the guiding means 3 and of the casing 2 (shown in Figure 9 but not Figure 4). These two arms 90, 91 are configured and arranged to displace parallel to one another in a rotational movement with respect to a respective axis of rotation 62, 63 of the second and third toothed wheels 60, 61, with the two second arms 90, 91 in turn being arranged parallel to the first arms 70, 71 during the rotational movement thereof. The movement of said second arms 90, 91 is induced by the movement of said first arms 70, 71, with the movement thereof being identical in any of the positions of rotation about the respective axis of rotation 62, 63.

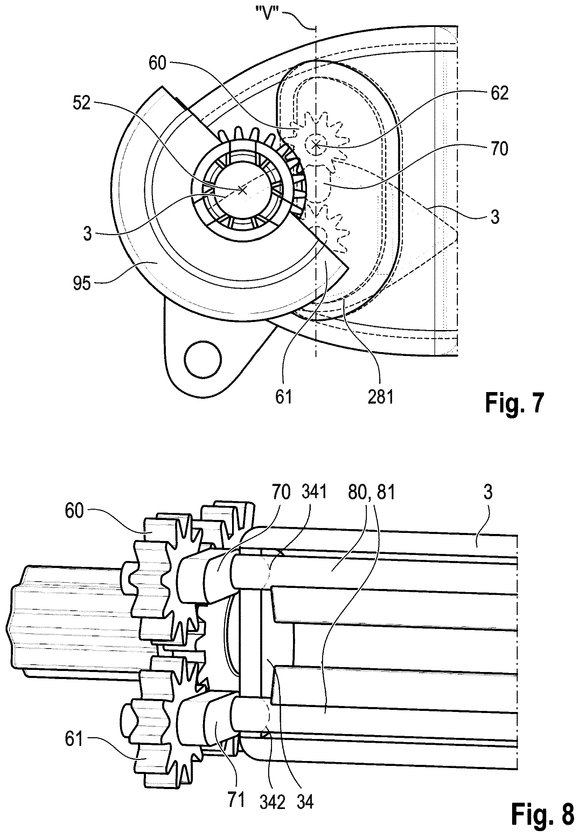

As regards the guiding means 3, it is mechanically linked to each of the free ends of the first and second rotating arms 70, 71, 90, 91, such that the guiding means 3 is displaced by the arms 70, 71, 90, 91 following a C-shaped path between the first upper position and the second lower position. This mechanical linkage between the guiding means 3 and the free ends of the first and second arms 70, 71, 90, 91 can be seen in detail in Figures 8 and 9, where this linkage is obtained by means of the provision of two longitudinal bodies 80, 81 extending in the transverse direction along the guiding means 3 and are arranged therein. These two thin longitudinal bodies 80, 81 extend separated from one another, parallel to one another, and parallel to the first axis of rotation 52.

The two longitudinal bodies 80, 81 are linked with the two side walls of the guiding means 3, allowing a relative rotation between the two longitudinal bodies 80, 81 and the guiding means 3. Therefore, the rotational movement of the free end of each eccentric part with respect to its respective axis of rotation 62, 63 induces the translational movement of the guiding means 3. In contrast, the mechanical linkage between the two longitudinal bodies 80, 81 and the guiding means 3 allows the existence of a relative rotation between said components. The guiding means 3 therefore does not experience any rocking or swinging movement during the displacement thereof, maintaining one same orientation with respect to the casing 2 during the entire displacement between the first upper position and the second lower position. The function of these longitudinal bodies 80, 81 is to integrally attach the free end of one of the two first arms 70, 71 with a respective free end of one of the two opposite second arms 90, 91.

Furthermore, the two longitudinal bodies 80, 81 are arranged in one same vertical, according to the vertical direction "Z", such that by combining the type of mechanical linkage set forth above with the guiding means 3, said translational movement, without swinging, of the guiding means 3 with respect to the casing 2 is ensured. For such purpose, the arms 70, 71, 90, 91 have one same length and the second and third toothed wheels 60, 61 rotate with respect to second and third axes of rotation 62, 63, respectively, with both toothed wheels 60, 61 and both axes of rotation 62, 63 being in one same vertical, depicted by the vertical axis "V".

Optionally, the longitudinal bodies 80, 81 comprise a respective reinforcement element extending longitudinally from a side end of the guiding means 3 to the opposite end, as observed in the attached Figures 4, 8, and 9 in the form of a projection which protrudes from each longitudinal body 80, 81.

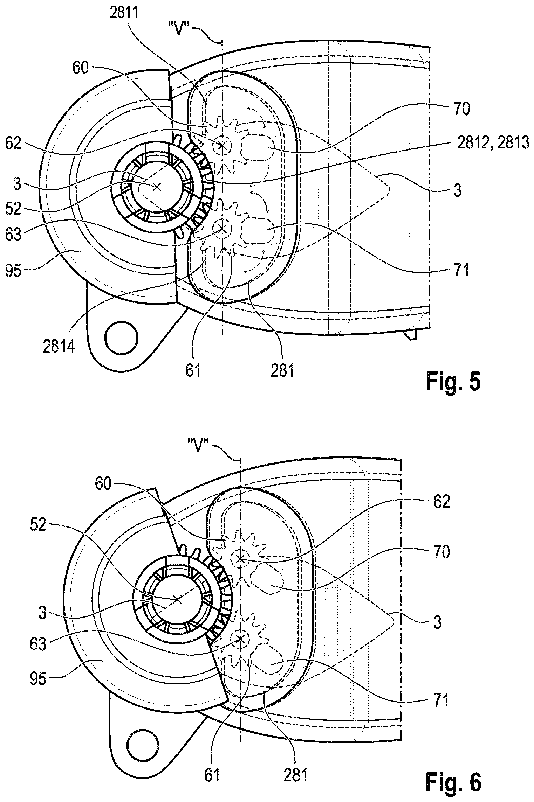

As regards the casing 2, each side wall 28, 29 has a respective opening 281, 291 (see Figures 5 to 7), wherein the opening 281 of one side is facing the opening 291 of the opposite side wall, wherein each of these two openings 281, 291 is arranged and configured with such a shape and size for housing the respective arms 70, 71, 90, 91 and to allow their rotational movement with respect to their respective second and third axes of rotation 62, 63.

Figures 5 to 7 show the geometry of one of the openings, specifically of opening 281, having a contour in the shape of an eight and having two different upper contact regions 2811, 2813 -one for each arm 70, 71- and two different lower contact regions 2812, 2914 -one for each arm 70, 71- with the respective upper arm 70 and lower arm 71, such that these upper contact regions 2811, 2813 and lower contact regions 2812, 2814 limit the rotational movement (see the arrows of rotation drawn where upward and downward rotation can be seen) of said arms 70, 71 and define the first upper position of displacement of the guiding means 3 and the second lower position of displacement of the guiding means 3, respectively. It can be seen in this Figure 5 that the lower contact region 2812 of the upper arm 70 is very close to the upper contact region 2813 of the lower arm 71. This very geometry of the opening 281 would be the same as the opening 291 of the opposite side, which is observed in Figure 9.

In the first Figure 5 it can be seen how the two arms 70, 71 are in a horizontal position. Accordingly, the guiding means 3 is arranged in the third middle position "B", i.e., in the position of maximum separation with respect to the outlet opening 22. In the second Figure 6, the arms tilt following the clockwise direction of advancement and in Figure 7, said arms 70, 71 are arranged in the vertical position. Accordingly, the guiding means 3 is arranged in the second lower position "C", i.e., in the position of minimum distance with respect to the outlet opening 22, with the guiding means 3 being close to the lower wall 24.

In reference to said Figures 5 to 7, it can be seen how the axes of rotation of the three toothed wheels are fixed and do not move with respect to the casing 2. Therefore, an anticlockwise rotational movement of the first toothed wheel 51 induces a clockwise rotational movement of the two second and third toothed wheels 60, 61, in turn forcing the free end of the arms 70, 71 to rotate in a clockwise direction and drives the guiding means 3 accordingly in the downward movement along the semicircular or C-shaped path to the second lower position "C".

Figure 8 shows the attachment between the two longitudinal bodies 80, 81 and a side wall 34 of the slat 3. It can be seen how the side wall 34 of the slat 3 has two semicircular recesses 341, 342 above and below the wall 34, designed so that each longitudinal body fits perfectly. In this case, each longitudinal body 80, 81 has a cylindrical body, such that the cylindrical body 80, 81 is inserted in a respective circular recess 341, 342, i.e., the upper cylindrical body 80 in the upper recesses 341 of each wall 34 and the lower cylindrical body 81 in the lower recesses 342.

Lastly, Figure 9 shows the opposite side of the diffuser when compared with that shown in the preceding Figure 8. It can be seen how the two longitudinal bodies 80, 81 extend until they reach the opposite wall 34 of the guiding means 3 and it is shown how, on this side, the respective fixed ends of the second arms 90, 91 are attached to respective shafts 92, 93 which are integral with the side wall 29 of the casing 2.

Although reference has been made to a specific embodiment of the invention, it is evident for one skilled in the art that the air diffuser suitable for installation in a vehicle described above is susceptible of a number of variations and modifications, and that all the mentioned details can be replaced with other technically equivalent details, without departing from the scope of protection defined by the attached claims.

## Claims

1. An air diffuser (1) for a vehicle, comprising at least:
- a casing (2), wherein the casing (2) defines an air inlet opening (21), an air outlet opening (22), and a cavity (23), wherein the cavity (23) is arranged between the inlet opening (21) and the outlet opening (22), wherein the casing (2) comprises respective lower and upper walls (24, 25) and respective side walls (28, 29) at the two transverse ends thereof according to a transverse axis "Y",
- an air guiding means (3) arranged inside the cavity (23) and configured for directing outgoing air through the outlet opening (22) according to a vertical direction "Z", and
- a mechanism (50) for displacing the guiding means (3) between a first upper position in which a front end (31) of the guiding means (3) is arranged close to the outlet opening (22), and a second lower position in which the front end (31) of the guiding means (3) is arranged close to the outlet opening (22) and vice versa, such that, in the multiple intermediate positions between the first upper position and the second lower position, the front end (31) of the guiding means (3) is arranged rearward with respect to the outlet opening (22);
**characterised in that**
- the mechanism (50) for displacing the air guiding means (3) between the first upper position and the second lower position and vice versa comprises:
- a first cylindrical toothed wheel (51) defining a first axis of rotation (52), wherein the first cylindrical toothed wheel (51) is arranged outside the cavity (23) and adjacent to one of the side walls (28, 29) of the casing (2);
- second and third cylindrical toothed wheels (60, 61) separated from one another defining respective second and third axes of rotation (62, 63), wherein the second and third cylindrical toothed wheels (60, 61) are coupled to the first cylindrical toothed wheel (51), said second and third cylindrical toothed wheels (60, 61) being driven by the first cylindrical toothed wheel (51), wherein the first axis of rotation (52) and the second and third axes of rotation (62, 63) are parallel to one another;
- two first arms (70, 71) extending from the respective axis of rotation (62, 63) of each of the second and third cylindrical toothed wheels (60, 61), with one end of each of said first arms (70, 71) being integral with a respective cylindrical toothed wheel of the second and third cylindrical toothed wheels (60, 61) such that the two first arms (70, 71) are configured and arranged to displace parallel to one another in a rotational movement with respect to their respective axis of rotation (62, 63);
- two second arms (90, 91) arranged in the opposite side wall (28, 29) of the casing (2) with respect to the two first arms (70, 71), wherein the two second arms (90, 91) are configured and arranged to displace parallel to one another in a rotational movement with respect to a respective axis of rotation (62, 63) of the second and third cylindrical toothed wheels (60, 61), with the two second arms (90, 91) in turn being arranged parallel to the first arms (70, 71) during the rotational movement thereof; and
- two longitudinal bodies (80, 81) extending in the transverse direction and arranged inside the guiding means (3), wherein each longitudinal body (80, 81) integrally joins the free end of one of the two first arms (70, 71) with a respective free end of one of the two opposite second arms (90, 91), the two longitudinal bodies (80, 81) extending parallel to one another and parallel to the first axis of rotation (52), wherein the two longitudinal bodies (80, 81) are linked with the guiding means (3), such that this attachment allows a relative rotation between the two longitudinal bodies (80, 81) and the guiding means (3); and
- the guiding means (3) is mechanically linked to each of the free ends of the first and second arms (70, 71, 90, 91), such that the guiding means (3) is displaced following a C-shaped path (36) between the first upper position and the second lower position.

2. The air diffuser (1) for a vehicle according to claim 1, wherein the longitudinal bodies (80, 81) are arranged in one same vertical, with both longitudinal bodies (80, 81) being separated from one another.

3. The air diffuser (1) for a vehicle according to claim 1 or 2, wherein the longitudinal bodies (80, 81) comprise a respective reinforcement element extending longitudinally from a side end of the guiding means (3) to the opposite end.

4. The air diffuser (1) for a vehicle according to any of the preceding claims, wherein each side wall (28, 29) of the casing (2) comprises a respective opening (281) facing the opening (291) of the opposite side wall, wherein each opening (281, 291) is configured and arranged to house the respective arms (70, 71, 90, 91) and to allow their rotational movement with respect to their respective second and third axes of rotation (62, 63).

5. The air diffuser (1) for a vehicle according to claim 4, wherein the openings (281, 291) of the side walls (28, 29) comprise a geometry such that they define an upper contact region and a lower contact region with the respective arms (70, 71, 90, 91) such that they limit the rotational movement of said arms (70, 71, 90, 91) and define the first upper position of displacement of the guiding means (3) and the second lower position of displacement of the guiding means (3), respectively.

6. The air diffuser (1) for a vehicle according to claim 5, wherein the lower contact region and the upper contact region of the openings (281, 291) of the side walls (28, 29) comprise a coating made of a soft material.

7. The air diffuser (1) for a vehicle according to any of the preceding claims, wherein the first cylindrical toothed wheel (51) further comprises an actuating body (95) which can be operated by the user to generate the rotational movement of the first cylindrical toothed wheel (51).

8. The air diffuser (1) for a vehicle according to any of claims 1 to 7, wherein the mechanism (50) comprises a servomotor coupled to the first cylindrical toothed wheel (51) such that it generates the rotational movement of the first cylindrical toothed wheel (51).

9. The air diffuser (1) for a vehicle according to any of the preceding claims, wherein the second and third cylindrical toothed wheels (60, 61) have the same size and configuration.

10. The air diffuser (1) for a vehicle according to claim 9, wherein the diameter of the second and third cylindrical toothed wheels (60, 61) is smaller than the diameter of the first cylindrical toothed wheel (51).

11. The air diffuser (1) for a vehicle according to any of the preceding claims, wherein the first cylindrical toothed wheel (51) and the second and third cylindrical toothed wheels (60, 61) are gears with their straight teeth arranged in the outer portion of each respective cylindrical toothed wheel (51, 60, 61).

12. The air diffuser (1) for a vehicle according to any of the preceding claims, wherein the first cylindrical toothed wheel (51), the second cylindrical toothed wheel (60), and the third cylindrical toothed wheel (61) are mechanically linked to the casing (2), thereby allowing a relative rotational movement of said first, second, and third cylindrical toothed wheels (51, 60, 61) with respect to the casing (2).

13. The air diffuser (1) for a vehicle according to any of the preceding claims, wherein the length of the arms (70, 71, 90, 91) is identical to one another, such that the second and third axes of rotation (62, 63) are arranged in one same vertical, and such that the longitudinal bodies (80, 81) are arranged in one same vertical during the rotational movement thereof with respect to their respective second and third axes of rotation (62, 63).

14. The air diffuser (1) for a vehicle according to any of the preceding claims, wherein it further comprises another air guiding means (40) by way of a plurality of parallel slats (40), configured to enable a changing of the direction of the airflow in a plane perpendicular to the plane of the air guiding means (3), wherein the plurality of slats (40) are arranged in a region adjacent to the inlet opening (21), inside the cavity (23), i.e., in a rear position with respect to the position occupied by the air guiding means (3).

## Patentansprüche

1. Luftverteiler (1) für ein Fahrzeug umfassend mindestens:
- ein Gehäuse (2), wobei das Gehäuse (2) eine Lufteinlassöffnung (21), eine Luftauslassöffnung (22) und einen Hohlraum (23) definiert, wobei der Hohlraum (23) zwischen der Einlassöffnung (21) und der Auslassöffnung (22) angeordnet ist, wobei das Gehäuse (2) jeweilige obere und untere Wände (24, 25) und jeweilige Seitenwände (28, 29) an den zwei Querenden davon gemäß einer Querachse "Y" umfasst,
- ein Führungsmittel (3), das innerhalb des Hohlraums (23) angeordnet und konfiguriert ist, um austretende Luft durch die Auslassöffnung (22) gemäß einer vertikalen Richtung "Z" zu leiten, und
- einen Mechanismus (50) zum Verschieben des Führungsmittels (3) zwischen einer ersten oberen Position, in der ein vorderes Ende (31) des Führungsmittels (3) nahe der Auslassöffnung (22) angeordnet ist, und einer zweiten unteren Position, in der das vordere Ende (31) des Führungsmittels (3) nahe der Auslassöffnung (22) angeordnet ist, und umgekehrt, so dass, in den zahlreichen Zwischenpositionen zwischen der ersten oberen Position und der zweiten unteren Position das vordere Ende (31) des Führungsmittels (3) nach hinten mit Bezug auf die Auslassöffnung (22) angeordnet ist;
**dadurch gekennzeichnet, dass**
- der Mechanismus (50) zum Verschieben des Luftführungsmittels (3) zwischen der ersten oberen Position und der zweiten unteren Position und umgekehrt Folgendes umfasst:
- ein erstes zylindrisches Zahnrad (51) das eine erste Drehachse (52) definiert, wobei das erste zylindrisches Zahnrad (51) außerhalb des Hohlraums (23) und benachbart einer der Seitenwände (28, 29) des Gehäuses (2) angeordnet ist,
- zweite und dritte zylindrische Zahnräder (60, 61), die voneinander getrennt sind und jeweilige zweite und dritte Drehachsen (62, 63) definieren, wobei die zweiten und dritten zylindrischen Zahnräder (60, 61) mit dem ersten zylindrischen Zahnrad (51) gekoppelt sind, wobei die zweiten und dritten zylindrischen Zahnräder (60, 61) vom ersten zylindrischen Zahnrad (51) angetrieben sind, wobei die erste Drehachse (52) und die zweite und dritte Drehachse (62, 63) parallel zueinander sind;
- zwei erste Arme (70, 71), die sich von der jeweiligen Drehachse (62, 63) jedes des zweiten und dritten zylindrischen Zahnrads (60, 61) erstrecken, wobei ein Ende jedes der ersten Arme (70, 71) einstückig mit einem jeweiligen zylindrischen Zahnrad der zweiten und dritten zylindrischen Zahnräder (60, 61) ist, so dass die zwei ersten Arme (70, 71) konfiguriert und angeordnet sind, um sich parallel zueinander in einer Drehbewegung mit Bezug auf ihre jeweilige Drehachse (62, 63) zu verschieben;
- zwei zweite Arme (90, 91), die in der entgegengesetzten Seitenwand (28, 29) des Gehäuses (2) mit Bezug auf die zwei ersten Arme (70, 71) angeordnet sind, wobei die zwei zweiten Arme (90, 91) konfiguriert und angeordnet sind, um sich parallel zueinander in einer Drehbewegung mit Bezug auf eine jeweilige Drehachse (62, 63) der zweiten und dritten zylindrischen Zahnräder (60, 61) zu verschieben, wobei die zwei zweiten Arme (90, 91) nacheinander parallel zu den ersten Armen (70, 71) während der Drehbewegung davon angeordnet sind; und
- wobei sich zwei längs gerichtete Körper (80, 81) in der Querrichtung erstrecken und innerhalb des Führungsmittels (3) angeordnet sind, wobei jeder längs gerichtete Körper (80, 81) einstückig das freie Ende eines der zwei ersten Arme (70, 71) mit einem jeweiligen freien Ende eines der zwei entgegengesetzten zweiten Arme (90, 91) verbindet, wobei sich die zwei längs gerichteten Körper (80, 81) parallel zueinander und parallel zur ersten Drehachse (52) erstrecken, wobei die zwei längs gerichteten Körper (80, 81) mit dem Führungsmittel (3) verbunden sind, so dass diese Befestigung eine relative Drehung zwischen den zwei längs gerichteten Körpern (80, 81) und dem Führungsmittel (3) ermöglicht; und
- das Führungsmittel (3) mechanisch mit jedem der freien Enden der ersten und zweiten Arme (70, 71, 90, 91) verbunden ist, so dass das Führungsmittel (3) gemäß einem C-förmigen Pfad (36) zwischen dem ersten oberen Abschnitt und dem zweiten unteren abschnitt verschoben wird.

2. Luftverteiler (1) für ein Fahrzeug nach Anspruch 1, wobei die längs gerichteten Körper (80, 81) in einer gleichen Vertikalen angeordnet sind, wobei beide längs gerichtete Körper (80, 81) voneinander getrennt sind.

3. Luftverteiler (1) für ein Fahrzeug nach Anspruch 1 oder 2, wobei die längs gerichteten Körper (80, 81) ein jeweiliges Verstärkungselement umfassen, das sich längs gerichtet von einen Seitenende des Führungsmittels (3) zum entgegengesetzten Ende erstreckt.

4. Luftverteiler (1) für ein Fahrzeug nach einem der vorhergehenden Ansprüche, wobei jede seitenwand (28, 29) des Gehäuses (2) eine jeweilige Öffnung (281) umfasst, die der Öffnung (291) der entgegengesetzten Seitenwand gegenüberliegt, wobei jede Öffnung (281, 291) konfiguriert und angeordnet ist, um die jeweiligen Arme (70, 71, 90, 91) aufzunehmen und ihre Drehbewegung mit Bezug auf ihre jeweilige zweite und dritte Drehachse (62, 63) zu ermöglichen.

5. Luftverteiler (1) für ein Fahrzeug nach Anspruch 4, wobei die Öffnungen (281, 291) der Seitenwände (28, 29) eine derartige Geometrie umfassen, dass sie eine obere Kontaktregion und eine untere Kontaktregion mit den jeweiligen Armen (70, 71, 90, 91) definieren, so dass sie die Drehbewegung der Arme (70, 71, 90, 91) begrenzen und die erste obere Position der Verschiebung des Führungsmittels (3) bzw. die zweite untere Position der Verschiebung des Führungsmittels (3) definieren

6. Luftverteiler (1) für ein Fahrzeug nach Anspruch 5, wobei die untere Kontaktregion und die obere Kontaktregion der Öffnungen (281, 291) der Seitenwände (28, 29) eine Beschichtung umfassen, die aus einem weichen Material hergestellt ist.

7. Luftverteiler (1) für ein Fahrzeug nach einem der vorhergehenden Ansprüche, wobei das erste zylindrische Zahnrad (51) ferner einen Betätigungskörper (95) umfasst, der vom Benutzer bedient werden kann, um die Drehbewegung des ersten zylindrischen Zahnrads (51) zu erzeugen.

8. Luftverteiler (1) für ein Fahrzeug nach einem der Ansprüche 1 bis 7, wobei der Mechanismus (50) einen Servomotor umfasst, mit dem ersten zylindrischen Zahnrad (51) gekoppelt ist, so dass er die Drehbewegung des ersten zylindrischen Zahnrads (51) erzeugt.

9. Luftverteiler (1) für ein Fahrzeug nach einem der vorhergehenden Ansprüche, wobei das zweite und dritte zylindrische Zahnrad (60, 61) die gleiche Größe und Konfiguration aufweisen.

10. Luftverteiler (1) für ein Fahrzeug nach Anspruch 9, wobei der Durchmesser des zweiten und dritten zylindrischen Zahnrads (60, 61) kleiner als der Durchmesser des ersten zylindrischen Zahnrads (51) ist.

11. Luftverteiler (1) für ein Fahrzeug nach einem der vorhergehenden Ansprüche, wobei das erste zylindrische Zahnrad (51) und das zweite und dritte zylindrische Zahnrad (60, 61) Getriebe sind, deren Geradverzahnung im äußeren Abschnitt jedes jeweiligen zylindrischen Zahnrads (51, 60, 61) angeordnet ist.

12. Luftverteiler (1) für ein Fahrzeug nach einem der vorhergehenden Ansprüche, wobei das erste zylindrische Zahnrad (51), das zweite zylindrische Zahnrad (60) und das dritte zylindrische Zahnrad (61) mechanisch mit dem Gehäuse (2) verbunden sind, wodurch eine relative Drehbewegung des ersten, zweiten und dritten zylindrischen Zahnrads (51, 60, 61) mit Bezug auf das Gehäuse (2) ermöglicht wird.

13. Luftverteiler (1) für ein Fahrzeug nach einem der vorhergehenden Ansprüche, wobei die Längen der Arme (70, 71, 90, 91) untereinander identisch sind, so dass die zweite und dritte Drehachse (62, 63) in einer gleichen Vertikalen angeordnet sind, und so dass die längs gerichteten Körper (80, 81) in einer gleichen Vertikalen während der Drehbewegung davon mit Bezug auf ihre jeweilige zweite und dritte Drehachse (62, 63) angeordnet sind.

14. Luftverteiler (1) für ein Fahrzeug nach einem der vorhergehenden Ansprüche, wobei er ferner ein weiteres Führungsmittel (40) mit Hilfe einer Vielzahl von parallelen Lamellen (40) umfasst, das konfiguriert ist, um eine Änderung der Richtung des Luftflusses in einer Ebene zu ermöglichen, die senkrecht zur Ebene der Luftführungsmittels (3) ist, wobei die Vielzahl von Lamellen (40) in einer Region benachbart zur Einlassöffnung (21) innerhalb des Hohlraums (23) angeordnet ist, d. h. in einer hinteren Position mit Bezug auf die Position, die vom Luftführungsmittel (3) eingenommen wird.

## Revendications

1. Diffuseur d'air (1) pour un véhicule comprenant au moins :
un boîtier (2), dans lequel le boîtier (2) définit une ouverture d'entrée d'air (21), une ouverture de sortie d'air (22) et une cavité (23), dans lequel la cavité (23) est agencée entre l'ouverture d'entrée (21) et l'ouverture de sortie (22), dans lequel le boîtier (2) comprend des parois inférieure et supérieure (24, 25) respectives et des parois latérales (28, 29) respectives au niveau de ses deux extrémités transversales selon un axe transversal « Y »,
un moyen de guidage d'air (3) agencé à l'intérieur de la cavité (23) et configuré pour diriger l'air sortant à travers l'ouverture de sortie (22) selon une direction verticale « Z », et
un mécanisme (50) pour déplacer le moyen de guidage (3) entre une première position supérieure dans laquelle une extrémité avant (31) du moyen de guidage (3) est agencée à proximité de l'ouverture de sortie (22), et une seconde position inférieure dans laquelle l'extrémité avant (31) du moyen de guidage (3) est agencée à proximité de l'ouverture de sortie (22) et vice versa, de sorte que dans les multiples positions intermédiaires entre la première position supérieure et la seconde position inférieure, l'extrémité avant (31) du moyen de guidage (3) est agencée à l'arrière par rapport à l'ouverture de sortie (22) ;
**caractérisé en ce que** :
le mécanisme (50) pour déplacer le moyen de guidage d'air (3) entre la première position supérieure et la seconde position inférieure et vice versa comprend :
une première roue dentée cylindrique (51) définissant un premier axe de rotation (52), dans lequel la première roue dentée cylindrique (51) est agencée à l'extérieur de la cavité (23) et de manière adjacente à l'une des parois latérales (28, 29) du boîtier (2) ;
des deuxième et troisième roues dentées (60, 61) séparées l'une de l'autre définissant des deuxième et troisième axes de rotation (62, 63) respectifs, dans lequel les deuxième et troisième roues dentées cylindriques (60, 61) sont couplées à la première roue dentée cylindrique (51), lesdites deuxième et troisième roues dentées cylindriques (60, 61) étant entraînées par la première roue dentée cylindrique (51), dans lequel le premier axe de rotation (52) et les deuxième et troisième axes de rotation (62, 63) sont parallèles entre eux ;
deux premiers bras (70, 71) s'étendant à partir de l'axe de rotation (62, 63) respectif de chacune des deuxième et troisième roues dentées cylindriques (60, 61), avec une extrémité de chacun desdits premiers bras (70, 71) qui est solidaire d'une roue dentée cylindrique respective des deuxième et troisième roues dentées cylindriques (60, 61) de sorte que les deux premiers bras (70, 71) sont configurés et agencés pour se déplacer parallèlement l'un par rapport à l'autre dans un mouvement de rotation par rapport à leur axe de rotation (62, 63) respectif ;
les deux seconds bras (90, 91) agencés dans la paroi latérale (28, 29) opposée du boîtier (2) par rapport aux deux premiers bras (70, 71), dans lequel les deux seconds bras (90, 91) sont configurés et agencés pour se déplacer parallèlement l'un par rapport à l'autre dans un mouvement de rotation par rapport à un axe de rotation (62, 63) respectif des deuxième et troisième roues dentées cylindriques (60, 61), avec les deux seconds bras (90, 91) agencés à leur tour parallèlement aux premiers bras (70, 71) pendant leur mouvement de rotation ; et
deux corps longitudinaux (80, 81) s'étendant dans la direction transversale et agencés à l'intérieur du moyen de guidage (3), dans lequel chaque corps longitudinal (80, 81) assemble, de manière solidaire, l'extrémité libre de l'un des deux premiers bras (70, 71) avec une extrémité libre respective de l'un des deux seconds bras (90, 91) opposés, les deux corps longitudinaux (80, 81) s'étendant parallèlement entre eux et parallèlement au premier axe de rotation (52), dans lequel les deux corps longitudinaux (80, 81) sont reliés avec le moyen de guidage (3), de sorte que cette fixation permet une rotation relative entre les deux corps longitudinaux (80, 81) et le moyen de guidage (3) ; et
le moyen de guidage (3) est mécaniquement relié à chacune des extrémités libres des premiers et seconds bras (70, 71, 90, 91), de sorte que le moyen de guidage (3) est déplacé en suivant une trajectoire en forme de C (36) entre la première position supérieure et la seconde position inférieure.

2. Diffuseur d'air (1) pour un véhicule selon la revendication 1, dans lequel les corps longitudinaux (80, 81) sont agencés dans une seule et même verticale, avec des deux corps longitudinaux (80, 81) qui sont séparés l'un de l'autre.

3. Diffuseur d'air (1) pour un véhicule selon la revendication 1 ou 2, dans lequel les corps longitudinaux (80, 81) comprennent un élément de renforcement respectif s'étendant longitudinalement à partir d'une extrémité latérale du moyen de guidage (3) à l'extrémité opposée.

4. Diffuseur d'air (1) pour un véhicule selon l'une quelconque des revendications précédentes, dans lequel chaque paroi latérale (28, 29) du boîtier (2) comprend une ouverture (281) respective faisant face à l'ouverture (291) de la paroi latérale opposée, dans lequel chaque ouverture (281, 291) est configurée et agencée pour loger les bras respectifs (70, 71, 90, 91) et pour permettre leur mouvement de rotation par rapport à leurs deuxième et troisième axes de rotation (62, 63) respectifs.

5. Diffuseur d'air (1) pour un véhicule selon la revendication 4, dans lequel les ouvertures (281, 291) des parois latérales (28, 29) comprennent une géométrie de sorte qu'elles définissent une région de contact supérieure et une région de contact inférieure avec les bras (70, 71, 90, 91) respectifs de sorte qu'elles limitent le mouvement de rotation desdits bras (70, 71, 90, 91) et définissent la première position supérieure de déplacement du moyen de guidage (3) et la seconde position inférieure de déplacement du moyen de guidage (3), respectivement.

6. Diffuseur d'air (1) pour un véhicule selon la revendication 5, dans lequel la région de contact inférieure et la région de contact supérieure des ouvertures (281, 291) des parois latérales (28, 29) comprennent un revêtement réalisé avec un matériau souple.

7. Diffuseur d'air (1) pour un véhicule selon l'une quelconque des revendications précédentes, dans lequel la première roue dentée cylindrique (51) comprend en outre un corps d'actionnement (95) qui peut être actionné par l'utilisateur afin de générer le mouvement de rotation de la première roue dentée cylindrique (51).

8. Diffuseur d'air (1) pour un véhicule selon l'une quelconque des revendications 1 à 7, dans lequel le mécanisme (50) comprend un servomoteur couplé à la première roue dentée cylindrique (51) de sorte qu'il génère le mouvement de rotation de la première roue dentée cylindrique (51).

9. Diffuseur d'air (1) pour un véhicule selon l'une quelconque des revendications précédentes, dans lequel les deuxième et troisième roues dentées cylindriques (60, 61) ont la même taille et la même configuration.

10. Diffuseur d'air (1) pour un véhicule selon la revendication 9, dans lequel le diamètre des deuxième et troisième roues dentées cylindriques (60, 61) est inférieur au diamètre de la première roue dentée cylindrique (51).

11. Diffuseur d'air (1) pour un véhicule selon l'une quelconque des revendications précédentes, dans lequel la première roue dentée cylindrique (51) et les deuxième et troisième roues dentées cylindriques (60, 61) sont des pignons avec leurs dents droites agencées dans la partie externe de chaque roue dentée cylindrique (51, 60, 61) respective.

12. Diffuseur d'air (1) pour un véhicule selon l'une quelconque des revendications précédentes, dans lequel la première roue dentée cylindrique (51), la deuxième roue dentée cylindrique (60) et la troisième roue dentée cylindrique (61) sont reliées mécaniquement au boîtier (2), permettant ainsi un mouvement de rotation relatif desdites première, deuxième et troisième roues dentées cylindriques (51, 60, 61) par rapport au boîtier (2).

13. Diffuseur d'air (1) pour un véhicule selon l'une quelconque des revendications précédentes, dans lequel la longueur des bras (70, 71, 90, 91) est identique à l'autre de sorte que les deuxième et troisième axes de rotation (62, 63) sont agencés dans une seule et même verticale, et de sorte que les corps longitudinaux (80, 81) sont agencés dans une seule et même verticale pendant leur mouvement de rotation par rapport à leurs deuxième et troisième axes de rotation (62, 63) respectifs.

14. Diffuseur d'air (1) pour un véhicule selon l'une quelconque des revendications précédentes, dans lequel il comprend en outre un autre moyen de guidage d'air (40) au moyen d'une pluralité de lamelles (40) parallèles, configurées pour permettre un changement de direction du flux d'air dans un plan perpendiculaire au plan du moyen de guidage d'air (3), dans lequel la pluralité de lamelles (40) sont agencées dans une région adjacente à l'ouverture d'entrée (21), à l'intérieur de la cavité (23), c'est-à-dire dans une position arrière par rapport à la position occupée par le moyen de guidage d'air (3).
